Europäisches Patentamt

European Patent Office

Office européen des brevets

(11) Numéro de publication: **0 033 254**

**A2**

# (12) DEMANDE DE BREVET EUROPEEN

(21) Numéro de dépôt: **81400022.0**

(22) Date de dépôt: **09.01.81**

(51) Int. Cl.³: **C 05 F 5/00**
**C 05 G 1/00**

(30) Priorité: **11.01.80 FR 8000609**

(43) Date de publication de la demande:
**05.08.81 Bulletin 81/31**

(84) Etats contractants désignés:
**BE DE FR IT NL**

(71) Demandeur: **Doncoeur, Armand**
**29, rue Passe-Demoiselles**
**F-51100 Reims(FR)**

(72) Inventeur: **Doncoeur, Armand**
**29, rue Passe-Demoiselles**
**F-51100 Reims(FR)**

(74) Mandataire: **Corre, Jacques Denis Paul et al,**
**Cabinet Regimbeau 26, Avenue Kléber**
**F-75116 Paris(FR)**

(54) **Procédé de préparation d'un engrais fluide thixotropique à base de vinasse et produit obtenu.**

(57) La présente invention concerne un procédé de préparation d'un engrais fluide thixotropique à base de vinasse.

Il s'agit d'un procédé caractérisé en ce que l'on mélange à la vinasse:

- un ou plusieurs composés libérant du gaz carbonique in situ;

- du phosphate de calcium qui peut être préparé in situ.

EP 0 033 254 A2

Croydon Printing Company Ltd.

Procédé de préparation d'un engrais
fluide thixotropique à base de vinasse et produit
obtenu

La présente invention concerne un procédé
de préparation d'un engrais fluide thixotropique à
base de vinasse ainsi que l'engrais fluide obtenu.

La vinasse est essentiellement un sous-
produit résultant de la fabrication de l'alcool par
fermentation. La vinasse est utilisable comme engrais
en agriculture mais, comme il s'agit là d'un produit
très pauvre en matières sèches, il doit être épandu
à proximité des usines ou bien être concentré pour
pouvoir être transporté.

On distingue les vinasses selon leurs
origines :
- vinasse de distillerie de betteraves,
- vinasse de distillerie de mélasse de sucrerie,
- vinasse de distillerie de mélasse de raffinerie
(sucre),
- vinasse de vin (cognac, armagnac, etc.),
- vinasse de pommes et poires,

- vinasse de céréales (alcool de grain).

On utilise également le terme de vinasse pour désigner un sous-produit résultant de la fabrication des levures de boulangerie, il s'agit des vinasses de levurerie.

En fait, actuellement, seules les vinasses de distillerie de mélasse de sucrerie ou de raffinerie et les vinasses de levurerie sont concentrées, les autres vinasses sont utilisées effectivement à proximité des usines.

La composition des éléments fertilisants pour 100 kg de vinasse concentrée est approximativement la suivante :

|  | AUTREFOIS | 1979 |
|---|---|---|
| Azote total | 3 à 4 % | 3 à 4 % |
| Acide phosphorique $(P_2O_5)$ | 0 % | 0 % |
| Potasse $(K_2O)$ | 9 % | 4 à 6 % |

Comme on peut le constater à la lecture de ce tableau, les progrès dans la fabrication de l'alcool ou des levures ont abaissé les teneurs des vinasses en potasse qui sont passées de 9 % autrefois à 4 à 6 % maintenant, ce qui oblige les agriculteurs à augmenter les quantités de vinasse épendue à l'hectare pour atteindre 3 tonnes et plus au lieu de 2 tonnes, mais, à 3 tonnes par hectare, l'apport d'azote total est trop important ; par contre, si l'agriculteur s'en tient à 2 tonnes par hectare, il doit compléter sa fumure par un épandage d'un autre produit, par exemple du chlorure de potassium.

Enfin, bien entendu, dans tous les cas, on constate que la vinasse ne constitue pas un engrais complet et qu'une fumure phosphatée de complément demeure indispensable.

Il était donc particulièrement intéressant de pouvoir élaborer un nouveau type d'engrais fluide à base de vinasse contenant à la fois la dose nécessaire de potassium ainsi d'ailleurs que le complément phosphaté qui en ferait un engrais complet.

Toutefois, compte tenu du fait que la vinasse se présente nécessairement sous forme d'un produit fluide, si l'on désire compléter la vinasse par l'apport d'autres produits tels que des sels minéraux, on constate que ces sels minéraux ont tendance à se déposer rapidement dans le fond des récipients de stockage ce qui rend impossible la préparation à l'avance de ce genre d'engrais équilibré.

Or, la présente invention permet la préparation, même très longtemps à l'avance, d'un engrais complet à base de vinasse dans lequel les sels minéraux actifs se trouvent à l'état de dispersion optimum.

Pour ce faire, la présente invention propose un procédé de préparation d'un engrais fluide thixotropique à base de vinasse, caractérisé en ce que l'on mélange à la vinasse :

- un ou plusieurs composés libérant du gaz carbonique in situ,

- du phosphate de calcium qui peut être préparé in situ.

Ce type de composition conduit à la formation d'un gel thixotropique permettant la conservation homogène du produit dans le temps, ledit gel se liquéfiant ensuite facilement, même sous une agitation très légère, la réaction étant d'ailleurs parfaitement réversible.

Cette invention repose sur la découverte que les vinasses concentrées possèdent en fait un pouvoir thixotropique, que l'utilisation de composés libérant du gaz carbonique in situ permet de maintenir les différents cristaux en suspension suffisamment longtemps pour que le gel thixotropique puisse se former et, enfin, que le phosphate de chaux présente un pouvoir épaississant qui améliore encore la formation du gel.

En outre, on a constaté que le gel obtenu est tel que dans le cas où l'on désire le liquéfier, ceci peut être obtenu de façon tout à fait aisée par simple agitation. Dans ce dernier cas, lorsque l'on arrête l'agitation le gel se reforme mais il se produit, en général, de nouveau un dégagement de gaz carbonique qui replace les sels minéraux en suspension et à l'état de dispersion optimum dans le gel.

Pour ce qui concerne le mélange proprement dit, celui-ci peut être effectué dans n'importe quel type de mélangeur et sans qu'il soit nécessaire de prendre des précautions particulières.

Dans un mode de mise en oeuvre préféré du procédé, selon la présente invention, le composé libérant des gaz carboniques est un carbonate, de préférence le carbonate de calcium, lequel peut être ajouté sous forme de défécation de sucrerie ; en effet, les défécations de sucrerie contiennent une teneur très importante en carbonate de calcium et constituaient jusqu'à maintenant un sous-produit sans utilité. Le carbonate de calcium libère le gaz carbonique dans le milieu acide constitué par la vinasse.

L'apport de phosphate de calcium peut se faire directement, par exemple en utilisant des phosphates naturels, ou bien le phosphate de calcium peut être préparé in situ, par exemple dans le cas où l'on utilise comme composé libérant du gaz carbonique le carbonate de calcium, en mélangeant de l'acide phosphorique qui conduira à la formation du phosphate de calcium.

D'ailleurs, dans ce dernier cas, les impuretés de type carbonate se trouvant au sein du phosphate naturel peuvent être suffisantes pour libérer du gaz carbonique in situ et il n'est pas nécessaire, pour ce cas, d'ajouter un autre carbonate.

Bien entendu, comme cela a été dit précédemment, afin d'équilibrer l'engrais ainsi constitué, on ajoute de préférence un sel apportant du potassium comme par exemple le chlorure de potassium qui sera maintenu en dispersion homogène au milieu du gel grâce aux différents composants évoqués précédemment.

Il est possible, si on le désire, d'ajouter d'autres éléments dans le cadre du procédé selon la présente invention, par exemple du phosphate sous forme de phosphate diammonique.

Enfin, dans le cas où les quantités d'acide phosphorique et de chlorure de potassium à ajouter sont assez importantes et conduisent à un très fort dégagement gazeux, il importe, afin d'éliminer la formation de mousse, d'ajouter un agent tensioactif au mélange, ce type d'agent tensioactif peut être de tout type connu, par exemple des agents du type SOPRADER ou SEPPIC.

La présente invention concerne également les engrais fluides thixotropiques à base de vinasse obtenus par la mise en oeuvre du procédé selon la présente invention.

Les exemples suivants sont destinés à illustrer la mise en oeuvre du procédé selon l'invention sans pour autant, bien entendu, en limiter la portée.

## EXEMPLE 1

### Vérification de la thixotropie apportée par la vinasse et vérification de l'effet du gaz carbonique

On effectue les trois mélanges suivants :

Composition 1 : Eau/phosphate diammonique/
                Chlorure de potassium,

Composition 2 : Vinasse/phosphate diammonique/
                Chlorure de potassium,

Composition 3 : Vinasse/phosphate diammonique/
                Chlorure de potassium/défécation de
                sucrerie ($CaCO_3$)

- Dans la composition 1 on observe une prise en masse rapide et la formation d'un béton ;

- Dans la composition 2 le mélange reste fluide et, bien que l'on observe un léger épaississement du milieu, les cristaux tendent à se déposer au fond du récipient ;

- Dans la composition 3 on observe un dégagement gazeux de $CO_2$ qui provient de l'acidité de la vinasse attaquant le carbonate de chaux et, bien que cette réaction soit assez lente, les cristaux sont répartis dans la masse qui se gélifie progressivement.

On obtient ainsi un gel présentant une répartition homogène des cristaux, lequel gel a pu être remis à l'état fluide par simple agitation au bout d'une durée de 12 mois.

## EXEMPLE 2

### Vérification de l'effet épaississant du phosphate de chaux

On mélange : de la vinasse/du phosphate diammonique/de l'acide phosphorique/de chlorure de potassium/et des défécations de sucrerie.

Dans ces conditions, on observe tout d'a-

bord un dégagement de $CO_2$ dû à la réaction de l'acide phosphorique sur la chaux qui conduit à la formation de phosphate de chaux qui a pour effet de créer un gel très épais où les cristaux sont très bien répartis. La réaction de gélification est excessivement rapide.

### EXEMPLE 3

Dans l'exemple précédent, on remplace le phosphate diammonique et les défécations de sucrerie par des phosphates naturels broyés (32 %).

Dans ces conditions, la réaction est beaucoup plus lente et l'on observe seulement un dégagement de $CO_2$ dû à l'action de l'acide phosphorique sur les impuretés du phosphate naturel. Le gel, bien que plus lent à se former, conduit à un mélange très homogène.

### EXEMPLE 4

Dans cet exemple, on désire remplacer le phosphate diammonique qui est un produit relativement cher par le phosphate de calcium préparé in situ à l'aide d'acide phosphorique et de défécation de sucrerie.

C'est pourquoi on mélange de la vinasse/ de l'acide phosphorique/des défécations de sucrerie/ et du chlorure de potassium.

Dans ces conditions, on observe un très fort dégagement gazeux avec une forte production de mousse et on obtient un mélange collant qui n'est pas utilisable. C'est pourquoi on effectue le même essai que précédemment mais en ajoutant un agent tensioactif SOPRADER 85.

Dans ces conditions on observe également un très fort dégagement gazeux avec une forte production de mousse mais qui tombe tout de suite grâce à l'agent tensioactif. On obtient ainsi un gel dans lequel les produits sont uniformément répartis.

L'essai précédent a été reproduit en remplaçant l'agent tensioactif SOPRADER 85 par l'agent tensioactif SEPPIC 11-E. On observe le même résultat, c'est-à-dire la production d'un gel parfaitement homogène.

Il est important de noter que l'ensemble des gels précédents ont été conservés pendant un an sans aucune dénaturation et qu'une simple agitation a conduit dans tous les cas à la formation d'un engrais fluide pouvant être utilisé avec les systèmes d'épandage classiques.

REVENDICATIONS

1) Procédé de préparation d'un engrais fluide thixotropique à base de vinasse, caractérisé en ce que l'on mélange à la vinasse :

– un ou plusieurs composés libérant du gaz carbonique in situ ;

– du phosphate de calcium qui peut être préparé in situ.

2) Procédé selon la revendication 1, caractérisé en ce que le composé libérant du gaz carbonique est un carbonate.

3) Procédé selon la revendication 2, caractérisé en ce que le carbonate est un carbonate de calcium.

4) Procédé selon la revendication 3, caractérisé en ce que le carbonate de calcium est ajouté sous forme de défécations de sucrerie.

5) Procédé selon l'une des revendications 1 à 4, caractérisé en ce que le phosphate de calcium est préparé in situ par action de l'acide phosphorique sur du carbonate de calcium.

6) Procédé selon l'une des revendications 1 à 4, caractérisé en ce que le phosphate de calcium est ajouté sous forme de phosphate naturel.

7) Procédé selon l'une des revendications 1 à 6, caractérisé en ce que l'on mélange également un composé apportant du potassium.

8) Procédé selon la revendication 7, caractérisé en ce que le composé apportant du potassium est le chlorure de potassium.

9) Procédé selon l'une des revendications 1 à 8, caractérisé en ce que l'on ajoute au mélange un agent tensioactif.

10) Engrais fluide thixotropique à base de vinasse obtenu par la mise en oeuvre du procédé selon l'une des revendications précédentes.